# EUROPÄISCHE PATENTSCHRIFT

(11) **EP 1 907 718 B1**
(45) Veröffentlichungstag und Bekanntmachung des Hinweises auf die Patenterteilung: **24.10.2012**
(21) Anmeldenummer: 06775686.6
(22) Anmeldetag: 08.07.2006
(51) Int. Cl.: F16D 13/58

(54) **HEBELANORDNUNG FÜR EINE REIBUNGSKUPPLUNG SOWIE REIBUNGSKUPPLUNG MIT EINER SOLCHEN HEBELANORDNUNG**
LEVER ARRANGEMENT FOR A FRICTION CLUTCH, AND FRICTION CLUTCH HAVING A LEVER ARRANGEMENT OF SAID TYPE
SYSTEME DE LEVIER POUR EMBRAYAGE A FRICTION ET EMBRAYAGE A FRICTION MUNI D'UN TEL SYSTEME DE LEVIER

(30) Priorität: 15.07.2005 DE 102005033760
(43) Veröffentlichungstag der Anmeldung: 09.04.2008
(73) Patentinhaber: Schaeffler Technologies AG & Co. KG, 91074 Herzogenaurach (DE)
(72) Erfinder: JORDAN, Mathieu, 67500 Haguenau (FR); MIH, Philippe, 2732 Reconvilier (CH)
(86) Internationale Anmeldenummer: PCT/DE2006/001184
(87) Internationale Veröffentlichungsnummer: WO 2007/009428

(56) Entgegenhaltungen:
- EP-A- 0 335 687
- EP-A- 0 779 446
- DE-A1- 10 312 951
- DE-A1-102004 018 377
- GB-A- 2 296 541
- US-A- 6 161 669
- US-A1- 2002 179 398

## Beschreibung

Die Erfindung betrifft eine Reibungskupplung mit einer Hebelanordnung, wobei die Hebelanordnung vorzugsweise zur Einleitung einer Schließkraft in die Reibungskupplung mittels eines auf die Hebelanordnung einwirkenden Aktors dient.

Die Erfindung betrifft insbesondere eine Reibungskupplung mit einer Hebelanordnung, die zumindest aus einer Vielzahl von in ringartiger Anordnung vorgesehenen Hebelelementen und einem von diesen getragenen, tellerfederartigen Bauteil besteht.

Derartige Hebelanordnungen sind beispielsweise durch die DE 33 21 822 A1 oder die DE 103 40 665 A1 vorgeschlagen worden.

Aus der GB 2 296 541 A, der EP 0 779 446 A1 und der US 200210179398 A1 ist eine Reibungskupplung mit einer Hebelanordnung, die ein eine Vielzahl von in ringartiger Anordnung vorgesehenen Hebelelementen enthaltendes Bauteil und ein von den Hebelelementen getragenes, tellerfederartiges Bauteil aufweist, bekannt. Die in Umfangsrichtung benachbart angeordneten Hebelelemente sind jeweils über Verbindungsabschnitte miteinander gekoppelt, die einstückig mit den Hebelelementen ausgebildet sind. Das tellerfederartige Bauteil ist mit Vorspannung auf den Hebelelementen verliersicher montiert, wobei das die Hebelelemente enthaltende Bauteil und das tellerfederartige Bauteil mittels über den Umfang verteilter Haltebolzen miteinander verspannt sind.

Der vorliegenden Erfindung lag die Aufgabe zugrunde, bei einer Reibungskupplung mit einer Hebelanordnungen die Funktion, Herstellung und Montage zu verbessern. Weiterhin soll die Möglichkeit geschaffen werden, die Federeigenschaften der Hebelanordnung an den jeweiligen Anwendungsfall anpassen zu können.

Erfindungsgemäß gelöst wird dieses Aufgabe durch eine Reibungskupplung gemäß Patentanspruch 1. Bevorzugte Ausführungsbeispiele der vorliegenden Erfindung sind in den abhängigen Ansprüchen dargelegt.

Durch die einstückige Ausgestaltung der Verbindungsabschnitte mit den Hebelelementen kann ein zusammenhängendes Bauteil aus einem Blechmaterial gebildet werden. Dadurch wird die Montage wesentlich erleichtert, da alle Hebelelemente zusammenhängen. Darüber hinaus kann das die Hebelelemente bildende Bauteil durch entsprechende Dimensionierung und Ausgestaltung der Verbindungsabschnitte tellerfederähnliche Federeigenschaften aufweisen. Die Federkennlinie des die Hebelelemente bildenden Bauteils ist dabei im Wesentlichen abhängig von der Formgebung und Dimensionierung der Verbindungsabschnitte. Das die Hebelelemente bildende Bauteil kann eine lineare, progressive, degressive oder sinusartig verlaufende Kraft-/Weg-Kennlinie aufweisen.

Im montierten Zustand des die Hebelanordnung bildenden Bauteiles und des tellerfederartigen Bauteils weisen das die Hebelementen enthaltende Bauteil und das tellerfederartige Bauteil praktisch die gleiche Konizität aufweisen. Das bedeutet also, dass die beiden Bauteile praktisch aneinander anliegen, wobei es jedoch zweckmäßig ist, wenn zwischen den aufeinander zu verspannten Bereichen dieser beiden Bauteile zumindest ein geringes Spiel verbleibt. Dadurch kann die während einer Konizitätsveränderung der Hebelanordnung auftretende Reibungshysterese verringert werden.

Die Verbindungsabschnitte können gemeinsam mit den Hebelelementen einen ringförmigen Energiespeicherbereich bilden. Die zwischen benachbarten Hebelelementen vorgesehenen Verbindungsabschnitte können jedoch in radialer Richtung auch schlaufenförmig zwischen den benachbarten Hebelelementen verlaufen, so dass sie eine weichere Federkennlinie erzeugen. Die Verbindungsabschnitte können also entsprechend der gewünschten Federkennlinie des die Hebelelemente bildenden Bauteiles ausgebildet werden.

Besonders vorteilhaft kann es sein, wenn die Verbindungsabschnitte in Bezug auf die radiale Erstreckung der Hebelelemente derart angeordnet sind, dass diese sowohl gegenüber dem Außenrand bzw. dem Außendurchmesser der Hebelanordnung als auch gegenüber dem Innenrand bzw. dem Innendurchmesser der Hebelanordnung radial versetzt sind. Die radiale Lage der Verbindungselemente kann dabei derart erfolgen, dass die neutrale Faser, also praktisch der ringförmige Bereich, um den bei einer Konizitätsveränderung des tellerfederartigen Bauteils die Verschwenkung der Hebelelemente erfolgt, im Bereich der Verbindungsabschnitte liegt. Durch eine derartige Ausgestaltung kann gewährleistet werden, dass die in den Verbindungsabschnitten auftretenden Spannungen verhältnismäßig gering gehalten werden können. Weiterhin kann dadurch eine Wellung der Verbindungsabschnitte zwischen den Hebelelementen weitgehend verhindert werden.

Vorteilhaft kann es sein, wenn der radiale Versatz der Verbindungsabschnitte gegenüber dem Außendurchmesser der Hebelanordnung derart bemessen ist, dass die gegenüber den Verbindungsabschnitten radial nach außen überstehenden Bereiche der Hebelelemente eine Erstreckung aufweisen, die 20 bis 40 % der radialen Erstreckung der radial nach innen überstehenden Bereiche beträgt. Die radiale Breite der Verbindungsabschnitte kann in der Größenordnung von 2 bis 20 % der radialen Erstreckung eines Hebelelementes liegen.

Zwischen benachbarten Hebelelementen können Schlitze und/oder Ausschnitte vorgesehen sein, wobei diese radial innerhalb der Verbindungsabschnitte angeordnet sein können. Zweckmäßig ist es, wenn auch radial außerhalb der Verbindungsabschnitte zwischen den Hebelelementen Schlitze und/oder Freischnitte vorhanden sind. Vorteilhaft kann es sein, wenn die radial außerhalb der Verbindungsabschnitte vorgesehenen Schlitze bzw. Ausschnitte in Umfangsrichtung breiter sind als die radial innerhalb der Verbindungsabschnitte vorgesehenen Schlitze bzw. Ausschnitte. Die radial außerhalb der Verbindungsabschnitte vorhandenen Ausschnitte können durch U-förmige Freischnitte gebildet sein.

In vorteilhafter Weise kann sich der äußere Umfangsbereich des tellerfederartigen Bauteils an den Hebelelementen abstützen und der radial innere Umfangsbereich des tellerfederartigen Bauteils mittels Halteelementen gegen das die Hebelelemente bildende Bauteil verspannt gehalten werden. Das tellerfederartige Bauteil kann an seinem radial inneren Umfangsbereich radiale Ausschnitte besitzen. Die Ausschnitte können dabei derart ausgestaltet sein, dass dadurch am radial inneren Umfangsbereich des tellerfederartigen Bauteils radiale Zungen gebildet sind. Zumindest einige der Ausschnitte des tellerfederartigen Bauteils können zur verspannten Halterung desselben herangezogen werden. Hierfür können die die Verspannung des tellerfederartigen Bauteils gewährleistenden Haltemittel im Bereich solcher Ausschnitte aufgenommen und an den benachbarten Materialbereichen abgestützt werden.

Das die Hebelelemente bildende, ringförmige Bauteil kann derart bemessen sein, dass es eine praktisch lineare Kraftwegkennlinie aufweist. Wie bereits erwähnt, können jedoch durch entsprechende Ausgestaltung der zwischen den einzelnen Hebelelementen vorhandenen Verbindungsabschnitte auch andere Kennlinienverläufe realisiert werden, und zwar in ähnlicher Weise, wie dies bei tellerfederartigen Bauteilen bekannt ist. Das von den Hebelelementen getragene, tellerfederartige Bauteil kann in vorteilhafter Weise einen sinusartigen Kraft-Weg-Verlauf aufweisen.

Weitere konstruktive und funktionelle Weiterbildungen der Erfindung sind aus der nun folgenden Figurenbeschreibung entnehmbar.

Dabei zeigen:
- Figur 1: eine Reibungskupplung in Draufsicht, bei der eine erfindungsgemäße Hebelanordnung verwendet ist,
- Figur 2: die in Figur 1 verwendete Hebelanordnung in Draufsicht,
- Figur 2a: die Hebelanordnung gemäß Figur 2 in verkleinerter, perspektivischer Darstellung,
- Figur 3: die Untersicht der Hebelanordnung gemäß Figur 2,
- Figur 3a: eine verkleinerte, perspektivische Darstellung der Hebelanordnung gemäß Figur 3,
- Figur 4 und 4a: die die Hebelanordnung bildenden Bauteile im entspannten und im montierten Zustand und
- Figur 5: ein Diagramm, in dem die Kraft-Weg-Kennlinien der die Hebelanordnung bildenden Bauteile sowie die sich daraus ergebende, resultierende Kraft-Weg-Kennlinie dargestellt sind.

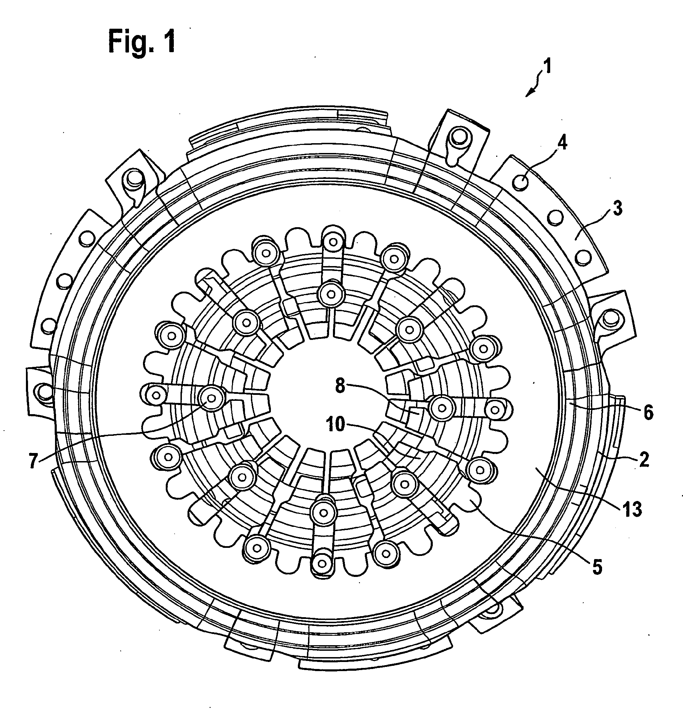

Die in Figur 1 in Draufsicht dargestellte Reibungskupplung 1 besitzt einen Kupplungsdeckel 2, der Randbereiche 3 besitzt mit Öffnungen 4 zur Aufnahme von Schrauben, mittels derer die Reibungskupplung 1 unter Zwischenlegung einer Kupplungsscheibe mit einer Gegendruckplatte, wie beispielsweise einem Schwungrad, verbindbar ist.

Die Reibungskupplung 1 besitzt weiterhin eine Hebelanordnung 5, die im Folgenden noch näher beschrieben wird. Die Hebelanordnung 5 stützt sich bei dem dargestellten Ausführungsbeispiel radial außen an dem inneren Randbereich 6 des Kupplungsdeckels 2 ab und beaufschlagt mit einem radial weiter innen liegenden, ringförmigen Bereich in bekannter Weise eine Druckplatte, welche eine Reibfläche aufweist zum Zusammenwirken mit einem Reibbelag einer Kupplungsscheibe.

Der prinzipielle Aufbau derartiger Reibungskupplungen, welche durch Einleitung einer Schließkraft auf die Hebelanordnung 5 mittels eines Aktors geschlossen werden, ist beispielsweise durch die DE 10 2005 025 773 A1, die EP 1452 760 A1 sowie den eingangs genannten Stand der Technik bekannt geworden.

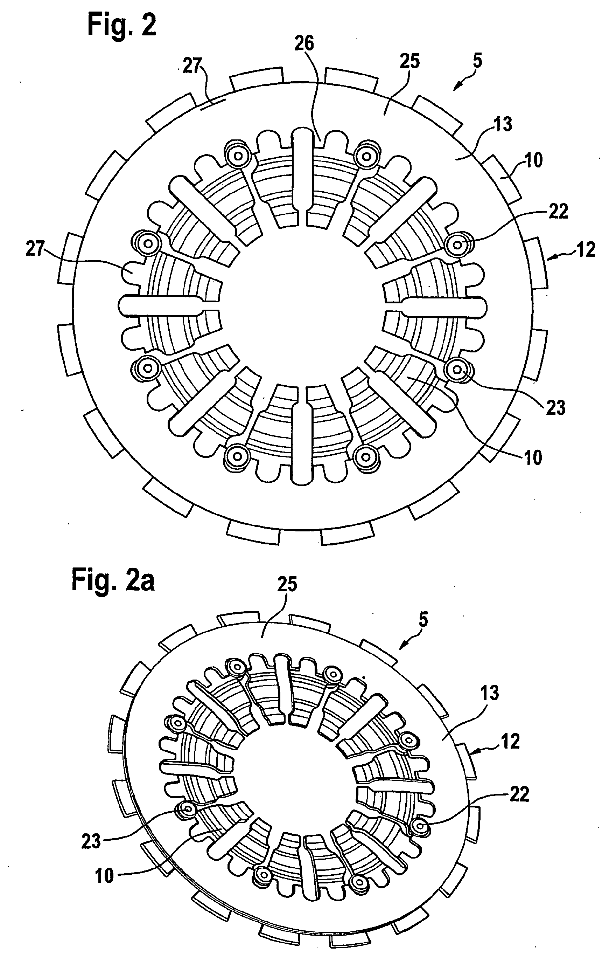

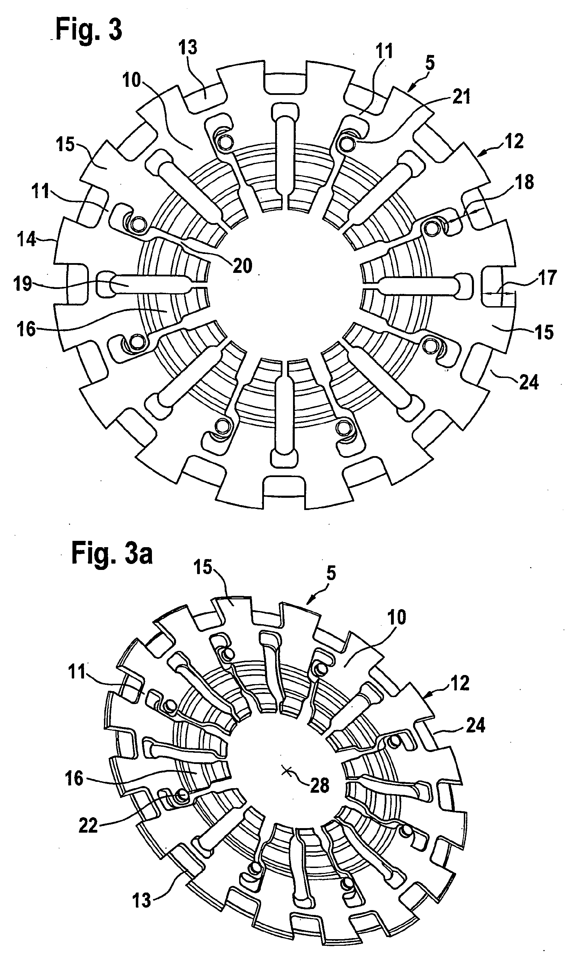

Bei der Ausgestaltung einer Reibungskupplung 1 gemäß Figur 1 ist die Hebelanordnung 5 nach Art eines einarmigen Hebels schwenkbar am Gehäuse 2 abgestützt. Die Hebelanordnung 5 könnte jedoch auch nach Art eines zweiarmigen Hebels verschwenkbar an einem Kupplungsgehäuse abgestützt bzw. gelagert sein. Es wird diesbezüglich auf die Figuren 2 und 3 der vorerwähnten EP 1452 760 A1 verwiesen, welche diese beiden Lagerungsanordnungen zeigen.

Die erfindungsgemäß ausgestaltete Hebelanordnung kann auch in besonders vorteilhafter Weise bei Reibungskupplungen eingesetzt werden, die gemäß der DE 10 2004 018 377 A1 ausgestaltet sind. Bei einem derartigen Aufbau einer Reibungskupplung ist die Hebelanordnung auch im nicht montierten Zustand der Anpressplatte in den Kupplungsdeckel von dieser Anpressplatte in einem elastisch verspannten Zustand getragen. Wie aus der DE 10 2004 018 377 A1 ebenfalls zu entnehmen ist, kann die Reibungskupplung, welche eine erfindungsgemäße Hebelanordnung aufweist, eine Verschleißnachstelleinrichtung besitzen, die zumindest den an den Reibbelägen der entsprechenden Kupplungsscheibe auftretenden Verschleiß kompensiert.

In Figur 1 sind die Haltemittel 7 erkennbar, welche die Hebelanordnung 5 auf der zugeordneten Druckplatte in einem vorgespannten Zustand halten, und zwar in ähnlicher Weise, wie dies die Haltemittel bzw. Verspannungsmittel 26 der DE 10 2004 018 377 A1 für die Tellerfeder 10 gewährleisten. Es sei jedoch bemerkt, dass derartige Haltemittel 7 nicht unbedingt er forderlich sind.

Zum Schließen der Reibungskupplung werden die Spitzen 8 der Hebelelemente 10 mittels eines Aktors beaufschlagt, und zwar in ähnlicher Weise, wie dies durch den vorerwähnten Stand der Technik bekannt geworden ist. Der entsprechende Aktor kann dabei Bestandteil eines pneumatischen, hydraulischen oder elektrischen Betätigungssystems sein, wobei auch Kombinationen dieser Betätigungssysteme möglich sind, also beispielsweise elektro-hydraulische Systeme.

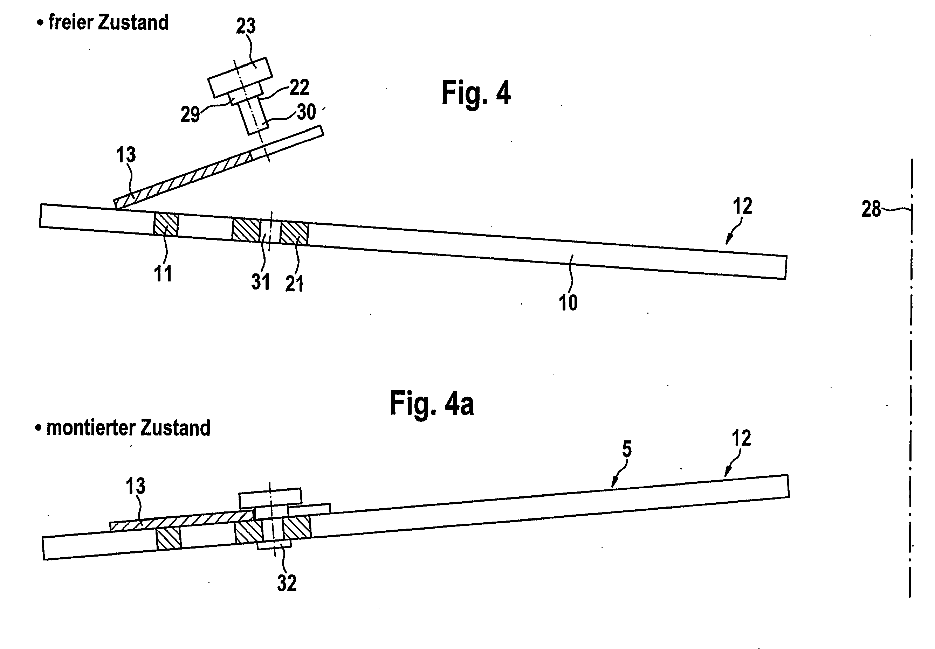

Wie aus den Figuren 1 bis 3a zu entnehmen ist, besteht die Hebelanordnung 5 aus einer Vielzahl von in ringartiger Anordnung vorgesehenen Hebelelementen 10, die radial ausgerichtet sind. Wie aus den Figuren 3 und 3a zu entnehmen ist, sind zwischen den einzelnen Hebelelementen 10 Verbindungsabschnitte 11 vorhanden, welche hier in ringförmiger Anordnung vorgesehen sind. Die Verbindungsabschnitte 11 sind aus dem gleichen Blechmaterial wie die Hebelelemente 10 hergestellt, also einstückig mit diesen. Durch entsprechende Ausgestaltung bzw. Bemessung, insbesondere der radialen Breite, der Dicke und des Verlaufes der Verbindungsabschnitte 11, kann die Federkennlinie erzeugt werden, welche die Hebelanordnung 5 besitzen soll. Das die Hebelelemente 10 und die Verbindungsabschnitte 11 bildende Bauteil 12 trägt ein tellerfederartiges Bauteil 13. Das tellerfederartige Bauteil 13 ist mit Vorspannung auf das Bauteil 12 montiert, wie dies noch in Zusammenhang mit Figur 4 und 4a beschrieben wird.

Wie aus den Figuren 3 und 3a weiterhin zu entnehmen ist, sind die Verbindungsabschnitte 11 gegenüber dem Außendurchmesser 14 der Hebelelemente 10 radial nach innen versetzt, so dass in Bezug auf diese Verbindungsabschnitte 11 die Hebelelemente 10 sowohl radial nach außen als auch radial nach innen verlaufende Bereiche 15, 16 bilden.

Die radiale Erstreckung 17 der äußeren Bereiche 15 kann in vorteilhafter Weise 20 bis 40 % der radialen Erstreckung der radial inneren Bereiche 16 betragen.

Die radiale Breite 18 der Verbindungsabschnitte 11 liegt zweckmäßiger Weise zwischen 2 und 20 % der gesamten radialen Erstreckung eines Hebelelementes 10.

Insbesondere aus den Figuren 3 und 3a ist ersichtlich, dass die radial inneren Bereiche 16 der Hebelelemente 10 durch Ausschnitte 19 und 20 voneinander getrennt sind. Bei dem dargestellten Ausführungsbeispiel besitzt das die Hebelelemente 10 bildende Bauteil 12 zwei Arten von Ausschnitten 19, 20, die unterschiedlich ausgebildet und in Umfangsrichtung betrachtet, hier alternierend angeordnet sind. Die Ausschnitte 20 sind derart ausgebildet, dass zumindest an einigen Hebelelementen 10 Befestigungsbereiche 21 gebildet werden. Diese Befestigungsbereiche 21 erstrecken sich bei dem dargestellten Ausführungsbeispiel in Umfangsrichtung und sind hier radial innerhalb der Verbindungsabschnitte 11 vorgesehen. Diese Befestigungsabschnitte 21 dienen zur Befestigung der Halteelemente 22, welche das tellerfederartige Bauteil 13 in einem verspannten Zustand halten. Die Halteelemente 22 sind bei dem dargestellten Ausführungsbeispiel durch mit den Bereichen 21 vernietete Haltebolzen gebildet, welche jeweils einen axialen Abstützkopf 23 bilden zur axialen Abstützung des vorgespannten, tellerfederartigen Bauteils 13.

Die Halteelemente 22 können jedoch auch im radialen Erstreckungsbereich der Hebelelemente 10 vorgesehen werden, wobei hierfür in die entsprechenden Hebelelemente 10 Ausnehmungen eingebracht werden. Bei einer derartigen Ausgestaltung können also die Befestigungsbereiche 21 entfallen, so dass, falls gewünscht, zwischen den einzelnen Hebelelementen 10 ein einheitlich ausgebildeter Ausschnitt, z. B. 19, vorgesehen werden kann.

Die radial äußeren Bereiche 15 der Hebelelemente 10 sind durch U-förmige Ausschnitte 24 voneinander getrennt. Diese Ausschnitte 24 besitzen bei dem dargestellten Ausführungsbeispiel eine größere umfangsmäßige Erstreckung als die Ausschnitte 19 oder 20.

Wie insbesondere aus den Figuren 2 und 2a zu entnehmen ist, besitzt das tellerfederartige Bauteil 13 einen ringförmigen Grundkörper 25, von dem aus radial nach innen gerichtete Zungen 26 ausgehen. Zur Bildung der Zungen 26 sind im radial inneren Bereich des tellerfederartigen Bauteils 13 Ausschnitte 27 eingebracht. Die Ausgestaltung bzw. umfangsmäßige Erstreckung der Ausschnitte 27 ist dabei derart bemessen, dass der Schaft der Halteelemente bzw. der Bolzen 22 sich durch die Ausschnitte 27 axial erstrecken können. Die Köpfe 23 der Haltebolzen 22 hintergreifen die Zungen 26, dadurch wird das tellerfederartige Bauteil 13 in einem verspannten Zustand auf dem die Hebelelemente 10 bildenden Bauteil 12 gehalten, zum Beispiel wie in Figur 4a gezeigt. Der radial äußere umfangsmäßige Bereich 27 des tellerfederartigen Bauteils 13 stützt sich axial an den Hebelelementen 10 ab. Bei dem dargestellten Ausführungsbeispiel erfolgt diese Abstützung im Bereich der äußeren Ausleger, welche durch die Bereiche 15 gebildet sind. Es ist ersichtlich, dass die Hebelelemente 10 gegenüber dem äußeren Randbereich 27 des tellerfederartigen Bauteils 13 hervorstehen. Dies ist zweckmäßig zur schwenkbaren Abstützung des die Hebelelemente 10 bildenden Bauteils 12 am Kupplungsgehäuse 2.

In Figur 4 ist der entspannte Zustand des die Hebelelemente 10 bildenden Bauteils 12 und des tellerfederartigen Bauteils 13 dargestellt. In Figur 4a ist der montierte Zustand dieser beiden Bauteile 12 und 13 dargestellt.

Wie aus Figur 4 ersichtlich, besitzt das die Hebelelemente 10 bildende Bauteil 12 und das tellerfederartige Bauteil 13 eine Konizität bzw. eine kegelstumpfförmig aufgestellte Form. Die Konizitäten der beiden Bauteile 12 und 13 sind unterschiedlich, wobei bei dem dargestellten Ausführungsbeispiel die Konizität dieser beiden Bauteile 12 und 13 in Bezug auf eine senkrecht zur Rotationsachse 28 verlaufende Ebene in unterschiedlichen axialen Richtungen verlaufen. Es kann jedoch auch zweckmäßig sein, wenn beide Bauteile 12 und 13 eine Konizität aufweisen, die in die gleiche axiale Richtung weist.

Bei dem dargestellten Ausführungsbeispiel werden das die Hebelelemente 10 bildende Bauteil 12 und das tellerfederartige Bauteil 13 mittels über den Umfang verteilte Haltebolzen 22 miteinander verspannt. Die Haltebolzen 22 besitzen, wie bereits beschrieben, eine hier durch einen Kopf 23 gebildete Erweiterung, an der sich das tellerfederartige Bauteil 13 zumindest axial abstützen kann. Die Haltebolzen 22 besitzen bei dem dargestellten Ausführungsbeispiel einen zylindrischen Abstandsbereich 29, dessen Länge vorzugsweise etwas größer ist als die Dicke des tellerfederartigen Bauteils 13. Durch eine derartige Bemessung des Bereiches 29 wird vermieden, dass das tellerfederartige Bauteil 13 fest eingeklemmt wird. Die Haftebolzen 22 besitzen weiterhin einen Nietbereich 30, der durch eine entsprechend angepasste Ausnehmung 31 in einem Bereich 21 eines Hebelelementes 10 hindurchsteckbar ist.

In Figur 4a ist der Nietkopf 32 eines Haltebolzens 22 ersichtlich.

Die von der Hebelanordnung 5 eingenommene, resultierende Konizität (gemäß Figur 4a) ist abhängig von den Federeigenschaften der beiden Bauteile 12 und 13.

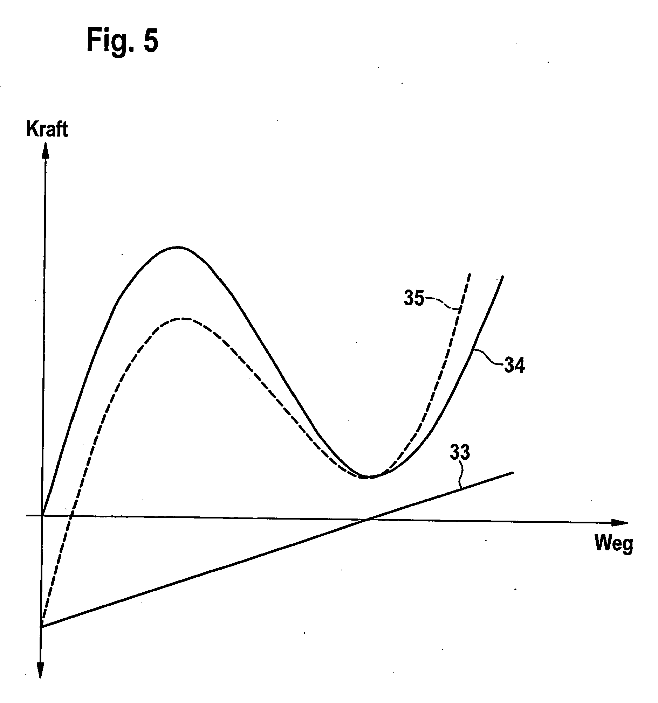

Figur 5 zeigt Beispiele für die Kraft-Weg-Kennlinien des die Hebelelemente 10 bildenden Bauteils 12 und des tellerfederartigen Bauteils 13 sowie die sich aus der Summe dieser beiden Kennlinien ergebende, resultierende Kennlinie, welche die Hebelanordnung 5 aufweist. Das die Hebelelemente 10 bildende Bauteil 12 besitzt einen Kennlinienverlauf 33 und das tellerfederartige Bauteil einen Kennlinienverlauf 34. Der sich ergebende, resultierende Kennlinienverlauf entspricht der Linie 35. Der Kennlinienverlauf 33 wird im Wesentlichen durch entsprechende Dimensionierung bzw. Ausgestaltung der Verbindungsabschnitte 11, welche die einzelnen Hebelelemente 10 miteinander verbinden, bestimmt. Aus dem Kennlinienverlauf 33 ist erkennbar, dass das die Hebelelemente 10 bildende Bauteil 12 derart ausgestaltet ist, dass dessen Kennlinie die Abszisse schneidet, was wiederum bedeutet, dass die axiale Kraftwirkung des Bauteiles 12 sich beim Durchfahren der Abszisse umkehrt. Dieser Sachverhalt ist auch aus dem resultierenden Kennlinienverlauf 35 entnehmbar, da nämlich in Bezug auf den Abszissendurchgang der Linie 33 die resultierende Kennlinie 35 auf der linken Seite dieses Abszissendurchganges gegenüber dem Kennlinienverlauf 34 geringere Kraftwerte aufweist, wohingegen auf der rechten Seite dieses Abszissendurchganges der resultierende Kennlinienverlauf 35 größere Kraftwerte aufweist, als der Kennlinienverlauf 34 des tellerfederartigen Bauteils 13.

Wie bereits erwähnt, stellen die in Figur 5 dargestellten Kennlinienverläufe lediglich Beispiele dar. Durch entsprechende Dimensionierung der die Federungseigenschaften gewährleistenden Bereiche der Bauteile 12 und 13 können beliebig andere Kennlinienverläufe realisiert werden. So könnte beispielsweise der Kennlinienverlauf 33 des Bauteils 12 ebenfalls einen gekrümmten Verlauf aufweisen, welcher auch ein Maximum und ein Minimum besitzen könnte, wie dies bei dem Kennlinienverlauf 34 der Fall ist. Die Differenz zwischen Maximum und Minimum kann entsprechend den Erfordernissen angepasst werden. Diesbezüglich wird beispielsweise auf die Auslegung von membranartigen bzw. tellerfederartigen Bauteilen verwiesen.

### Bezugszeichenliste

- 1: Reibungskupplung
- 2: Kupplungsdeckel/Gehäuse
- 3: Randbereiche
- 4: Öffnungen
- 5: Hebelanordnung
- 6: Innerer Randbereich
- 7: Haltemittel
- 8: Spitzen
- 9: -
- 10: Hebelelemente
- 11: Verbindungsabschnitte
- 12: Bauteil
- 13: Tellerfederartiges Bauteil
- 14: Außendurchmesser
- 15: Äußere Bereiche
- 16: Innere Bereiche
- 17: Radiale Erstreckung der äußeren Bereiche 15
- 18: Radiale Breite von den Verbindungsabschnitten 11
- 19: Ausschnitt
- 20: Ausschnitt
- 21: Befestigungsbereiche
- 22: Halteelemente
- 23: Axialer Abstützkopf
- 24: U-förmige Abschnitte
- 25: Ringförmiger Grundkörper
- 26: Zungen
- 27: Ausschnitte / äußerer Randbereich
- 28: Rotationsachse
- 29: Zylindrischer Abstandsbereich
- 30: Nietbereich
- 31: Ausnehmung
- 32: Nietkopf
- 33: Kennlinienverlauf
- 34: Kennlinienverlauf
- 35: Linie

## Patentansprüche

1. Reibungskupplung (1) mit einer Hebelanordnung (5), die zumindest ein eine Vielzahl von in ringartiger Anordnung vorgesehenen Hebelelementen (10) enthaltendes Bauteil (12) und ein von den Hebelelementen (10) getragenes, tellerfederartiges Bauteil (13) aufweist, wobei die in Umfangsrichtung benachbart angeordneten Hebelelemente (10) jeweils über Verbindungsabschnitte (11) miteinander gekoppelt sind, die einstückig mit den Hebelelementen (10) ausgebildet sind, wobei das tellerfederartige Bauteil (13) mit Vorspannung auf den Hebelelementen (10) verliersicher montiert ist, wobei das die Hebelelemente (10) enthaltende Bauteil (12) und das tellerfederartige Bauteil (13) mittels über den Umfang verteilter Haltebolzen (22) miteinander verspannt sind, **dadurch gekennzeichnet, dass** das tellerfederartige Bauteil (13) derart verspannt auf die Hebelelemente (10) montiert ist, dass das die Hebelelemente (10) enthaltende Bauteil (12) und das tellerfederartige Bauteil (13) praktisch die gleiche Konizität aufweisen, und dadurch dass die Verbindungsabschnitte (11) zwischen den Hebelelementen (10) gegenüber einem Außendurchmesser der Hebelanordnung (5) radial nach innen versetzt sind, und die Hebelelemente (10) in Bezug auf die Verbindungsabschnitte (11) radial nach außen und radial nach innen verlaufende Bereiche (15, 16) besitzen.

2. Reibungskupplung (1) nach Anspruch 1, wobei die radiale Erstreckung der radial äußeren Bereiche (15) von 20 bis 40 % der radialen Erstreckung der radial inneren Bereiche (16) beträgt.

3. Reibungskupplung (1) nach Anspruch 1 oder 2, wobei die radiale Breite der Verbindungsabschnitte (11) 2 bis 20 % der radialen Erstreckung eines Hebelelements (10) beträgt.

4. Reibungskupplung (1) nach einem der Ansprüche 1 bis 3, wobei zwischen benachbarten Hebelelementen (10) Schlitze und/oder Ausschnitte (19, 20) vorhanden sind, die radial innerhalb der Verbindungsabschnitte (11) vorgesehen sind.

5. Reibungskupplung (1) nach einem der Ansprüche 1 bis 4, wobei radial außerhalb der Verbindungsabschnitte (11) zwischen benachbarten Hebelelementen (10) U-förmige Freischnitte (24) vorhanden sind.

6. Reibungskupplung (1) nach einem der Ansprüche 1 bis 5, wobei sich ein äußerer Umfangsbereich des tellerfederartigen Bauteils (13) an den Hebelelementen (10) abstützt, und ein radial innerer Umfangsbereich des tellerfederartigen Bauteils (13) mittels Halteelementen (22) gegen das die Hebelelemente (10) enthaltende Bauteil (12) verspannt gehalten wird.

7. Reibungskupplung (1) nach einem der Ansprüche 1 bis 6, wobei das tellerfederartige Bauteil (13) an seinem radial inneren Umfangsbereich radiale Ausschnitte (27) besitzt.

8. Reibungskupplung (1) nach einem der Ansprüche 1 bis 7, wobei das tellerfederartige Bauteil (13) an seinem radial inneren Umfangsbereich radiale Zungen (26) bildet.

9. Reibungskupplung (1) nach einem der Ansprüche 6 bis 8, wobei die die Verspannung des tellerfederartigen Bauteils (13) gewährleistenden Halteelemente (22) im Bereich von Ausschnitten (27) des tellerfederartigen Bauteils (13) aufgenommen sind.

10. Reibungskupplung (1) nach einem der Ansprüche 1 bis 9, wobei das die Hebelelemente (10) enthaltende Bauteil (12) und das tellerfederartige Bauteil (13) vor der Montage eine unterschiedliche Konizität aufweisen.

11. Reibungskupplung (1) nach einem der Ansprüche 1 bis 10, wobei das die Hebelelemente (10) enthaltende Bauteil (12) eine praktisch lineare Kraft-/Weg-Kennlinie aufweist.

12. Reibungskupplung (1) nach einem der Ansprüche 1 bis 11, wobei das tellerfederartige Bauteil (13) einen sinusartigen Kraft-/Weg-Verlauf aufweist.

## Claims

1. Friction clutch (1) having a lever arrangement (5) which has at least one component (12) comprising a multiplicity of lever elements (10) provided in an annular arrangement and which has a plate-spring-like component (13) which is borne by the lever elements (10), wherein the lever elements (10) which are arranged adjacent to one another in the circumferential direction are coupled to one another in each case via connecting portions (11) which are formed in one piece with the lever elements (10), wherein the plate-spring-like component (13) is mounted captively with preload on the lever elements (10), wherein the component (12) comprising the lever elements (10) and the plate-spring-like component (13) are braced with one another by means of retaining bolts (22) distributed over the circumference, **characterized in that** the plate-spring-like component (13) is mounted in braced fashion on the lever elements (10) in such a way that the component (12) comprising the lever elements (10) and the plate-spring-like component (13) have practically the same conicity, and **in that** the connecting portions (11) between the lever elements (10) are offset radially inward relative to an outer diameter of the lever arrangement (5), and the lever elements (10) have regions (15, 16) which run radially outward and radially inward in relation to the connecting portions (11).

2. Friction clutch (1) according to Claim 1, wherein the radial extent of the radially outer regions (15) amounts to 20 to 40% of the radial extent of the radially inner regions (16).

3. Friction clutch (1) according to Claim 1 or 2, wherein the radial width of the connecting portions (11) amounts to 2 to 20% of the radial extent of a lever element (10).

4. Friction clutch (1) according to one of Claims 1 to 3, wherein between adjacent lever elements (10) there are provided slots and/or cutouts (19, 20) which are provided radially within the connecting portions (11).

5. Friction clutch (1) according to one of Claims 1 to 4, wherein U-shaped cutouts (24) are provided radially outside the connecting portions (11) between adjacent lever elements (10).

6. Friction clutch (1) according to one of Claims 1 to 5, wherein an outer circumferential region of the plate-spring-like component (13) is supported on the lever elements (10), and a radially inner circumferential region of the plate-spring-like component (13) is held braced by means of retaining elements (22) against the component (12) comprising the lever elements (10).

7. Friction clutch (1) according to one of Claims 1 to 6, wherein the plate-spring-like component (13) has radial cutouts (27) on its radially inner circumferential region.

8. Friction clutch (1) according to one of Claims 1 to 7, wherein the plate-spring-like component (13) forms radial tongues (26) on its radially inner circumferential region.

9. Friction clutch (1) according to one of Claims 6 to 8, wherein the retaining elements (22) which ensure the bracing of the plate-spring-like component (13) are received in the region of cutouts (27) of the plate-spring-like component (13).

10. Friction clutch (1) according to one of Claims 1 to 9, wherein the component (12) comprising the lever elements (10) and the plate-spring-like component (13) have different conicities before assembly.

11. Friction clutch (1) according to one of Claims 1 to 10, wherein the component (12) comprising the lever elements (10) has a practically linear force/travel characteristic curve.

12. Friction clutch (1) according to one of Claims 1 to 11, wherein the plate-spring-like component (13) has a sinusoidal force/travel profile.

## Revendications

1. Embrayage à friction (1) avec un système de leviers (5), qui comporte au moins un composant (12) contenant une multiplicité d'éléments de levier (10) prévus en agencement annulaire et un composant (13) en forme de plateau élastique porté par les éléments de levier (10), dans lequel les éléments de levier (10) disposés à proximité l'un de l'autre en direction périphérique sont chaque fois couplés l'un à l'autre par des parties de liaison (11), qui sont réalisées d'une seule pièce avec les éléments de levier (10), dans lequel le composant en forme de plateau élastique (13) est monté de façon imperdable avec précontrainte sur les éléments de levier (10), dans lequel le composant (12) contenant les éléments de levier (10) et le composant en forme de plateau élastique (13) sont serrés l'un avec l'autre au moyen de boulons de maintien (22) répartis sur la périphérie, **caractérisé en ce que** le composant en forme de plateau élastique (13) est monté en étant serré sur les éléments de levier (10) de telle manière que le composant (12) contenant les éléments de levier (10) et le composant en forme de plateau élastique (13) présentent pratiquement la même conicité, et **en ce que** les parties de liaison (11) entre les éléments de levier (10) sont décalées radialement vers l'intérieur par rapport à un diamètre extérieur du système de leviers (5) et les éléments de levier (10) comportent des régions (15, 16) s'étendant radialement vers l'extérieur et radialement vers l'intérieur par rapport aux parties de liaison (11).

2. Embrayage à friction (1) selon la revendication 1, dans lequel l'extension radiale des régions radialement extérieures (15) vaut de 20 à 40 % de l'extension radiale des régions radialement intérieures (16).

3. Embrayage à friction (1) selon la revendication 1 ou 2, dans lequel la largeur radiale des parties de liaison (11) vaut 2 à 20 % de l'extension radiale d'un élément de levier (10).

4. Embrayage à friction (1) selon l'une quelconque des revendications 1 à 3, dans lequel il se trouve entre des éléments de levier (10) voisins des fentes et/ou des découpes (19, 20), qui sont prévues radialement à l'intérieur des parties de liaison (11).

5. Embrayage à friction (1) selon l'une quelconque des revendications 1 à 4, dans lequel il se trouve, radialement à l'extérieur des parties de liaison (11), des coupes libres en forme de U (24) entre des éléments de levier voisins (10).

6. Embrayage à friction (1) selon l'une quelconque des revendications 1 à 5, dans lequel une région périphérique extérieure du composant en forme de plateau élastique (13) s'appuie sur les éléments de levier (10), et une région périphérique radialement intérieure du composant en forme de plateau élastique (13) est maintenue serrée au moyen d'éléments de maintien (22) contre le composant (12) contenant les éléments de levier (10).

7. Embrayage à friction (1) selon l'une quelconque des revendications 1 à 6, dans lequel le composant en forme de plateau élastique (13) comporte des découpes radiales (27) à sa région périphérique radialement intérieure.

8. Embrayage à friction (1) selon l'une quelconque des revendications 1 à 7, dans lequel le composant en forme de plateau élastique (13) forme des languettes radiales (26) à sa région périphérique radialement intérieure.

9. Embrayage à friction (1) selon l'une quelconque des revendications 6 à 8, dans lequel les éléments de maintien (22) garantissant le serrage du composant en forme de plateau élastique (13) sont logés dans la région de découpes (27) du composant en forme de plateau élastique (13).

10. Embrayage à friction (1) selon l'une quelconque des revendications 1 à 9, dans lequel le composant (12) contenant les éléments de levier (10) et le composant en forme de plateau élastique (13) présentent avant le montage une conicité différente.

11. Embrayage à friction (1) selon l'une quelconque des revendications 1 à 10, dans lequel le composant (12) contenant les éléments de levier (10) présente une caractéristique force/déplacement pratiquement linéaire.

12. Embrayage à friction (1) selon l'une quelconque des revendications 1 à 11, dans lequel le composant en forme de plateau élastique (13) présente une courbe force/déplacement sinusoïdale.
